# EUROPEAN PATENT APPLICATION

(11) **EP 0 577 242 A2**
(43) Date of publication of application: **05.01.1994**
(21) Application number: 93302486.1
(22) Date of filing: 30.03.1993
(51) Int. Cl.: H04N 3/185

(54) **CRT driving system with reduced radiated electric field**

(30) Priority: 17.04.1992 US 870301
(71) Applicant: Wu, Tzu-Chiang, Taipei (TW)
(72) Inventor: Hsu, Sung-Shan, Fen Yuan Hsiang, Chang Hua Hsien (TW)
(74) Representative: Hallam, Arnold Vincent

(57) **Abstract**

An anti-horizontal-impulse cathode-ray-tube driving system comprises an added coil (14) disposed at a location corresponding to the primary coil (11) of the horizontal output transformer (1) thereof, the added coil having one end connected to the output terminal of an anode high voltage generator and an opposite end connected to the anode (22) of the cathode-ray-tube (2) to be driven, and being controlled to produce an induced voltage (Vₖ) of reversed phase in countering the capacitance (Cₜ) formed between the anode (22) and the earthed graphite (23) of the cathode-ray-tube (2). Under the process of capacitive coupling, the horizontal impulse voltage (V_{ct}) which is produced at the anode high voltage (V_{ce}), is prevented from forming an alternating electrical field around the cathode-ray-tube (2).

## Description

### BACKGROUND OF THE INVENTION

The present invention relates to an anti-horizontal-impulse cathode-ray-tube driving system, and more particularly to such a driving system having an additional coil added to the horizontal output transformer of the cathode-ray-tube and controlled to produce an induced voltage, in phase reverse to the upper horizontal impulse of the anode high voltage, connected between the high voltage generator and the anode so as to eliminate the horizontal impulse from the display of the magnetic deflection type of cathode-ray-tube and the radiation of the alternating electrical field derived therefrom.

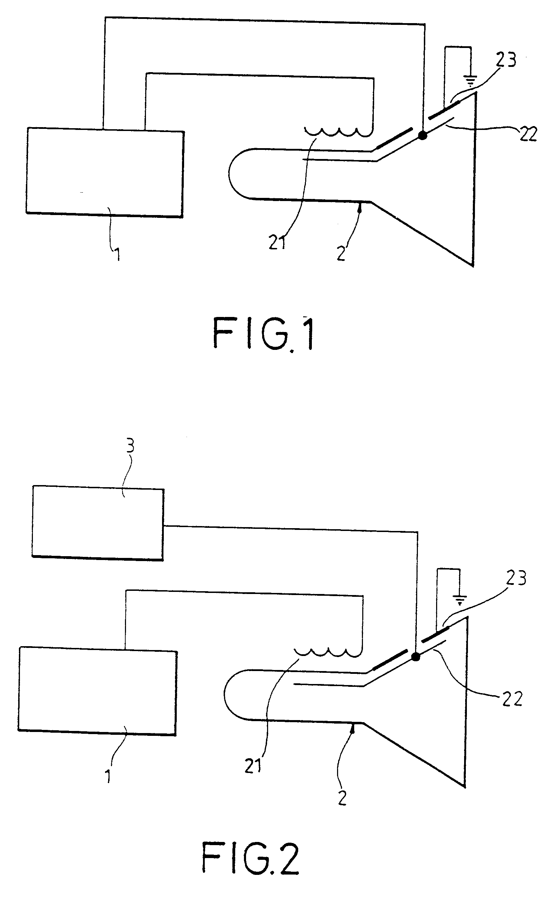

The known magnetic deflection type cathode-ray-tube driving systems are generally gathered into two types, namely, the compound type and the separated type, as shown in Figures 1 and 2, according to whether the high voltage is derived from the horizontal output or from a separate generator. In either type, a horizontal deflection yoke (HDY) (21) is mounted around the neck portion of the cathode-ray-tube (2), and driven by the horizontal output (1) to provide the cathode-ray-tube (2) with a horizontal deflection field. In a compound type cathode-ray-tube driving system, anode high voltage is simultaneously provided by the horizontal output (1), while in a separated type cathode-ray-tube driving system, anode high voltage is provided by a high voltage generator (3). Using a high voltage generator to provide an anode high voltage increases the cost of a cathode-ray-tube driving system, but ensures better quality. Figure 1 illustrates a compound type cathode-ray-tube driving system according to the prior art, in which the circuit which provides an anode high voltage is incorporated into the circuit of the horizontal output. This design reduces the manufacturing cost of a driving system. However, its wide anode high voltage load regulation affects the stability of the raster produced in conjunction with the horizontal deflection yoke.

Figure 2 illustrates a separated type cathode-ray-tube driving system according to the prior art, in which an independent high voltage generator (3) is provided to produce an anode high voltage. This design ensures a cathode-ray-tube in which a more stable raster is produced. However, the arrangement of the high voltage generator (3) makes the structure complicated, and simultaneously increases the manufacturing cost of the driving system.

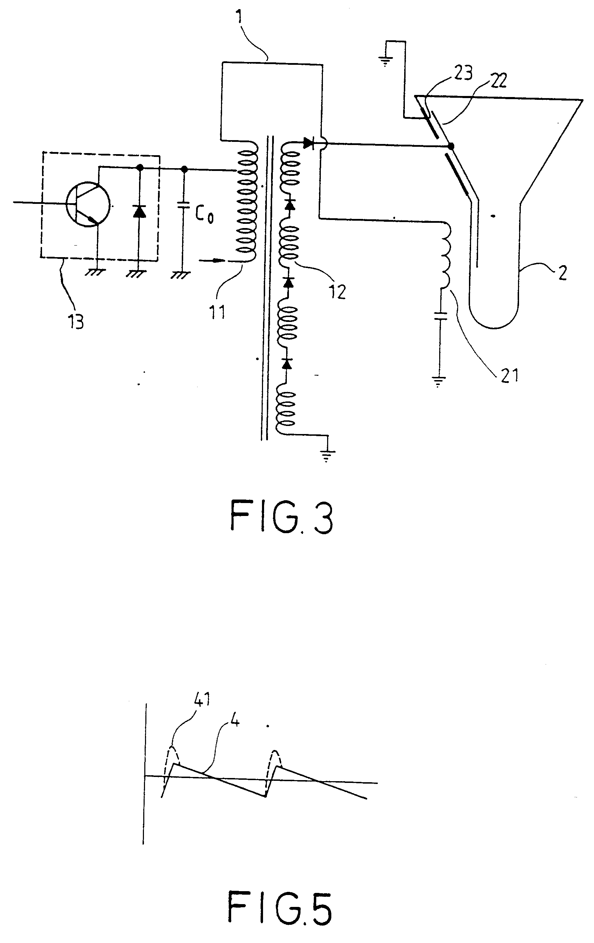

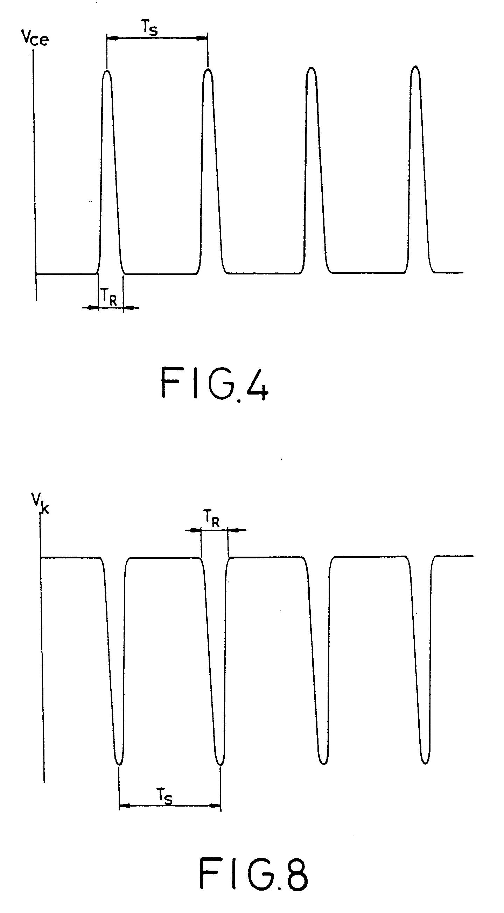

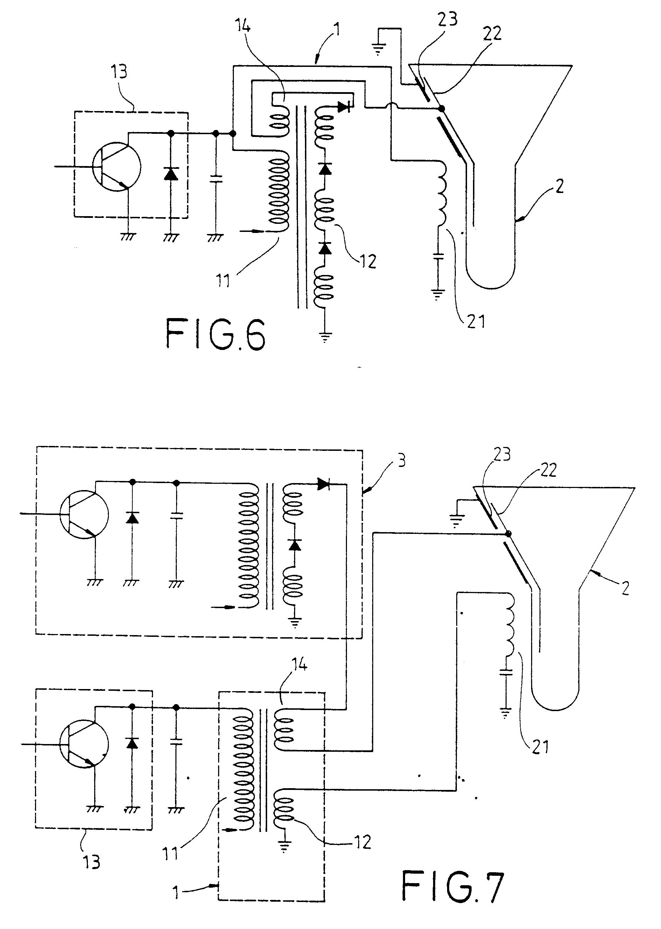

In either of the aforesaid two prior art cathode-ray-tube driving systems, an alternating electrical field 1(AEF) is produced between the anode (22) of the cathode-ray-tube (2) and the earthed external graphite layer (23). As illustrated in Figure 3, a capacitance C_{y} is formed between the horizontal deflection yoke (21) and the anode (22), and another capacitance Cₜ is formed between the graphite layer (23) and the anode (22). The two capacitances C_{y}, Cₜ form into a series circuit to bear the voltage V_{ce} at the horizontal deflection yoke (21), as shown in Figure 4. Therefore: 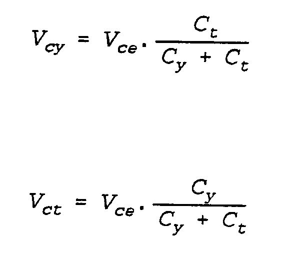
in which, the voltage V_{cy} at the capacitance C_{y} is limited to the area between the horizontal deflection yoke (21) and the anode (22), and hardly affects the physiological functions of the people or the operation of the electric appliances nearby. On the contrary, the voltage V_{ct} at the capacitance Cₜ is superimposed on the anode high voltage (4), and therefore an impulse (41) is formed, as shown in the dotted lines in Figure 5. When connected to earth, the impulse forms into an alternating electrical field (AEF) around the cathode-ray-tube. Because the alternating electrical field is radiative, it is harmful to the physiological functions of the people nearby, and interferes with the operation of other electric appliances. Because the phase and cycle of the impulse are approximately equal to the voltage V_{ce} at the horizontal deflection yoke (21), the impulse is called synchronous horizontal impulse or horizontal impulse.

In order to eliminate the aforesaid alternating electrical field, a Farady's shield may be used. Originally, a Farady's shield was made from a metal material and used to isolate the radiation source from the outside. In recent years, plastics materials are used in making a Farady's shield with the inside surface thereof coated with a conductive material. After connection to earth, the outside surface of a Farady's shield forms an earth potential. This method serves to shield a radiation source but not to eliminate it completely. Furthermore, the installation of a Farady's shield complicates the manufacturing process of a cathode-ray-tube driving system, and simultaneously increases its manufacturing cost.

### SUMMARY OF THE INVENTION

The present invention seeks to reduce the aforesaid disadvantages.

Accordingly the present invention provides the combination of a cathode-ray-tube and a driving system therefor, wherein:
said cathode-ray-tube has:
a graphite layer on an external surface thereof at a location corresponding to an internal anode thereof;
and a horizontal deflection yoke mounted externally around a neck portion of the cathode-ray-tube;
wherein said anode and said graphite layer form a first, capacitance, and said horizontal deflection yoke and said anode form a second capacitance;
and said driving system has a horizontal output transformer comprising a primary winding and a secondary winding;
characterized in that said transformer has a further winding for providing an induced voltage of reverse phase to and substantially equal to the horizontal impulse voltage produced at the anode voltage by the capacitance, thereby to reduce said horizontal impulse voltage.

Therefore, the main object of the present invention is directly to incorporate an added coil inside the horizontal output transformer, so as to directly eliminate synchronous horizontal synchronizing impulse or horizontal impulse from the anode high voltage of the cathode-ray-tube. Another object of the present invention is to use an added coil in eliminating horizontal synchronizing impulse or horizontal impulse from a cathode-ray-tube, so as to eliminate the high cost arrangement of a Farady's shield.

### BRIEF DESCRIPTION OF THE DRAWINGS

The present invention is described hereinafter, by way of example, with reference to the accompanying drawings, in which:
Figure 1 is a schematic drawing showing the composition of a compound type of cathode-ray-tube driving system according to the prior art;
Figure 2 is a schematic drawing showing the composition of a separated type of cathode-ray-tube driving system according to the prior art;
Figure 3 is a circuit diagram for the driving system of Figure 1;
Figure 4 illustrates the waveform of the impulse voltage V_{ce} at the horizontal deflection yoke in a cathode-ray-tube according to the prior art;
Figure 5 illustrates the waveform of the horizontal synchronizing impulse superimposed on the anode high voltage in a cathode-ray-tube according to the prior art;
Figure 6 is a circuit diagram of a compound type cathode-ray-tube driving system according to the present invention;
Figure 7 is a circuit diagram of a separated type cathode-ray-tube driving system according to the present invention; and
Figure 8 illustrates the waveform of the induced voltage Vₖ produced by the added coil of the systems of Figures 7 and 8.

### DETAILED DESCRIPTION OF THE PREFERRED EMBODIMENT

Referring to Figures 6 and 7, the present invention is generally comprised of an electronic switch 13, a resonance capacitor C₀, a horizontal output transformer 1, and a cathode-ray-tube (CRT) 2. In a separate type as shown in Figure 7, a high voltage generator 3 is needed. A graphite layer 23 is covered on the CRT 2 opposed to the anode 22 thereof, and connected to earth. The glass medium of the tube is between the anode 22 and the graphite layer 23, and therefore a capacitance Cₜ is formed therebetween. A horizontal deflection yoke (HDY) 21 is mounted around the neck portion of the CRT 2 opposite to the anode 22 and separated by glass medium, and therefore another capacitance C_{y} is formed between the HDY 21 and the CRT 2. The horizontal output transformer is comprised of a primary coil (PRIM) 11, of which the number of turns is Nₚ, a secondary coil (SEC) 12, of which the number of turns is Nₛ, and controlled to provide a horizontal deflection power and the required anode high voltage. The resonance capacitor C₀ is incorporated with the PRIM 11 and the HDY 21, forming into a resonance circuit for energy feedback during flyback period, and at the same time, an impulse voltage V_{ce} is produced in the PRIM 11 and the HDY 21. The electronic switch 13 is regularly controlled by input signals to open or close.

The main feature of the present invention is having an added coil 14 set at a location corresponding to the PRIM 11 of the horizontal output transformer. The number of turns of the added coil 14 is Nₖ. The added coil 14 has one end connected to the output terminal of the anode high voltage, and an opposite end connected to the anode 22 of the CRT 2. When the output of the anode high voltage passes through the added coil 14, the added coil 14 produces a pulse Vₖ superimposed on the anode high voltage with the phase thereof reversed to that of the horizontal impulse which is coupled from the horizontal deflection yoke (see Figure 8).

When the electronic switch 13 is closed (Ts), the PRIM 11 and the metal shield (HDY) accumulate magnetic energy. Once the electronic switch 13 is opened (Tr), cumulative magnetic energy is turned into electrical energy and fed back to the power supply or transmitted to loads via the horizontal output transformer 1. As shown in the circuit diagrams of Figures 6 and 7, the electrical energy is boosted into the anode high voltage H. After having been treated through the process of rectification, the anode high voltage thus obtained is sent to the anode 22 of the CRT. At the same time, cumulative magnetic energy from the PRIM 11 and the HDY 21 is turned into electrical energy and produces an impulse voltage V_{ce} on the horizontal deflection yoke in cycles according to the time difference between the closing and opening of the electronic switch 13, as the voltage waveform at the location of the horizontal deflection yoke shown in Figure 4.

As indicated, the capacitance Cₜ is formed between the anode 22 of the CRT 2 and the graphite layer 23. After the formation of the voltage V_{ce}, a voltage V_{ct} is formed at the capacitance Cₜ. The phase and cycle of the voltage V_{ct} are approximately equal to the impulse voltage V_{ce}, and therefore it superimposes on the anode high voltage 4, as shown in Figure 5, forming into a synchronous horizontal impulse or horizontal impulse 41. After having been connected to earth, the horizontal impulse 41 forms into an alternating electrical field (AEF) around the CRT 2.

In order effectively to eliminate the horizontal impulse and the alternating electrical field around the CRT, the present invention adds the added coil 14 (of which the number of turns is Nₖ) to match with the PRIM 11 (of which the number of turns is Nₚ) of the horizontal output transformer 1, so as to produce an induced voltage Vₖ in phase reverse to the anode high voltage 4 but in cycle the same as the anode high voltage 4. Therefore, by superimposing the induced voltage Vₖ on the anode high voltage 4, the horizontal impulse 41 on the anode high voltage 4, which is produced by the voltage V_{ct} of the capacitance Cₜ, is almost eliminated. The number of turns Nₖ of the added coil 14 is calculated according to the following equations:

Firstly, the value of the voltage V_{ct} which produces the horizontal impulse is: 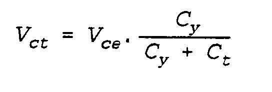
Secondly, the value of the induced voltage Vₖ produced by the added coil 14 is: 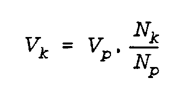
Because the voltage V_{ct} of the horizontal impulse has a reversed phase relative to the induced voltage Vₖ from the added coil 14, the absolute value of voltages V_{ct} and Vₖ should be the same so that they both can cancel each other. Therefore:

${\text{|V}}_{\text{k}} {\text{| = |V}}_{\text{ct}} \text{|}$

By expanding the aforesaid equations, the number of turns of the added coil 14 shall be equal to: 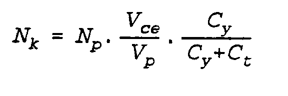
Thus, it can almost completely eliminate the horizontal impulse 41 which is superimposed on the anode high voltage 4 by the voltage V_{ct} of the capacitance Cₜ.

## Claims

1. The combination of a cathode-ray-tube (2) and a driving system therefor, wherein:
said cathode-ray-tube has:
a graphite layer (23) on an external surface thereof at a location corresponding to an internal anode (22) thereof;
and a horizontal deflection yoke (21) mounted externally around a neck portion of the cathode-ray-tube;
wherein said anode and said graphite layer form a first, capacitance (Cₜ), and said horizontal deflection yoke and said anode form a second capacitance (C_{y});
and said driving system has a horizontal output transformer (1) comprising a primary winding (11) and a secondary winding (12);
characterized in that said transformer has a further winding (14) for providing an induced voltage (Vₖ) of reverse phase to and substantially equal to the horizontal impulse voltage (V_{ct}) produced at the anode voltage by the capacitance Cₜ, thereby to reduce said horizontal impulse voltage (V_{ct}).

2. The combination as claimed in claim 1 wherein the number of turns (Nₖ) of said further winding (14) are determined by the equation: 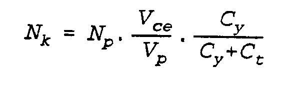 where
Nₚ is the number of turns of said primary winding (11)
Vₚ is the voltage induced in said primary winding
V_{ce} is the anode high voltage
thereby to provide an induced voltage Vₖ where: 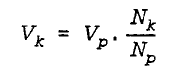 and wherein the horizontal impulse voltage (V_{ct}) added to the anode high voltage is determined by the equation:

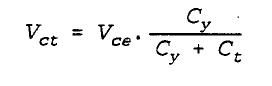

3. The combination as claimed in claim 1 or 2 wherein said further winding (14) couples said anode high voltage (V_{ce}) to said anode (22).

4. The combination as claimed in claim 3 wherein said further winding (14) couples said secondary winding (12) to said anode (22).

5. The combination as claimed in claim 3 wherein said further winding (14) couples an anode high voltage generator (3) to said anode (22).

6. The combination as claimed in any of the preceding claims wherein said further winding (14) is disposed at a location corresponding to said primary coil (11).
